# EUROPÄISCHE PATENTANMELDUNG

(11) **EP 0 849 474 A1**
(43) Veröffentlichungstag der Anmeldung: **24.06.1998**
(21) Anmeldenummer: 97121793.0
(22) Anmeldetag: 11.12.1997
(51) Int. Cl.: F16B 1/00, F16B 25/10, F16B 5/02, E04B 1/26

(54) **Bohrschraube**

(30) Priorität: 17.12.1996 DE 29621923 U
(71) Anmelder: MiTek Industries GmbH, 63128 Dietzenbach (DE)
(72) Erfinder: Wieland, Heinz, CH-7304 Maienfeld (DE)
(74) Vertreter: Blumbach, Kramer & Partner GbR

(57) **Zusammenfassung**

Die Bohrschraube (1) umfaßt eine Bohrspitze (2), einen vorderen Schaftabschnitt (3), einen hinteren Schaftabschnitt (4) und einen Schraubkopf (5) und kann durch zwei Holzbauteile (31, 32) unter Einschluß eines Metallblechs (30) selbstschneidend hindurchgetrieben werden. Die Bohrschraube gräbt sich eine Bohrung (34) im Holz, die spätestens zum Zeitpunkt des Durchstoßens des Blechs (30) genügend weit ist, um den vorderen Schaftabschnitt (3) der Bohrschraube klemmungsfrei durchdringen zu können. Nach dem Durchstoßen des Metallblechs (30) bildet sich in der Blechbohrung (35) ein Schraubgewinde, der vordere Abschnitt (3) der Bohrschraube bohrt und verankert sich in dem vorderen Holzbauteile (31), und der hintere Schaftabschnitt (4) verankert sich in dem hinteren Holzbohrloch (34).

## Beschreibung

Die Erfindung bezieht sich auf ein Holztragwerk, auf ein Verfahren zu seiner Herstellung sowie auf eine Bohrschraube als Herstellungsmittel nach dem Oberbegriff des Anspruchs 1.

Ein solches Holztragwerk ist als Nagelverbindung "Greim" bekannt und in der DE 29 14 716 C2 beschrieben. Es sind Schlitze in den zu verbindenden Hölzern vorgesehen, die mit Knotenblechen zusammengesteckt und quer, durch die Knotenbleche hindurch, mit Nägeln durchsetzt sind, um die Verbindung zu sichern. Eine solche Stahlblech-Holz-Nagelverbindung hat sich bewährt. Nachteilig ist jedoch, daß man im allgemeinen mehrere, zueinander parallele Bleche an einem Knoten verwenden muß, um vorbohrungsfrei die Bleche durchnageln zu können. Mehrere Bleche an einem Knoten bedingen jedoch eine entsprechende Anzahl von Schlitzen in den Hölzern, was die Herstellung der Stahlblech-Holz-Nagelverbindung verteuert. Ferner muß eine relativ große Anzahl von Nägeln verwendet werden, um den Knoten zu sichern.

Aus der DD 236 563 A1 ist ein Verbindungselement für plattenförmige Teile bekannt, bei dem die Konstruktionsglieder und Anschlüsse eines Knotenpunktes vorgebohrt werden und dann das Verbindungselement mit spiralförmigen Gewindezügen an seinen Enden und einem glatten Schaftmittelteil eingeschraubt wird. Diese Herstellungsweise ist wegen des Vorbohrens umständlich und wegen der mangelhaften Verankerung des Verbindungselements im Blech nicht sehr tragfähig.

Zur Befestigung eines Werkstücks geringer Härte an einem Werkstück größerer Härte ist eine Bohr- und Gewindeformschraube bekannt (DE 15 00 798 B), die einen Schraubkopf, eine Bohrspitze, einen Gewindeschaft und wegbrechbare Vorsprünge aufweist, die zum Schneiden des Bohrlochs in dem weicheren Material dienen und beim Auftreffen auf härteres Material wegbrechen. Der Gewindeschaft kann sich in der durch die Bohrspitze vorgebohrten Bohrung durch Schneiden eines Gewindes verankern. Ein dreilagiges Holzbautragwerk mit einem mittigen Knotenblech und äußeren Holzbauteilen kann nicht mit einer solchen Bohrschraube montiert werden.

Eine ähnliche selbstbohrende und -gewindeschneidende Schraube ist aus der DE 42 16 198 A1 bekannt. Damit kann lediglich einlagiges Holz an Metall festgeschraubt werden.

Schließlich sind auch Schraubbolzen mit einem vorderen und einem hinteren Gewindeabschnitt bekannt (CH 687 036 A5). Zwischen beiden Gewindeabschnitten erstreckt sich ein gewindeloser Bereich und eine Schneidhilfe zum Fräsen eines dem Kerndurchmesser des hinteren Gewindeabschnitts entsprechenden Loches. Mit diesem Schraubbolzen können unmittelbar zwei Holzteile zusammengeschraubt werden, nicht jedoch durch ein Knotenblech hindurch.

Der Erfindung liegt die Aufgabe zugrunde, ein Holztragwerk der angegebenen Art zu schaffen, bei dem die Holz-Metallblech-Holz-Verbindung verbessert ist.

Nach einem Aspekt der Erfindung wird ein Holztragwerk in einem Zuge hergestellt.

Nach einem weiteren Aspekt der Erfindung soll eine Bohrschraube geschaffen werden, die sich für eine Holz-Metallblech-Holz-Verbindung eignet.

Die gestellte Aufgabe wird aufgrund der Maßnahmen der Ansprüche 1, 3 oder 5 gelöst und durch die weiteren Merkmale der abhängigen Ansprüche ausgestaltet und weiterentwickelt.

Durch die Verwendung höchstens zweier Knotenbleche im Inneren des Holztragwerks lassen sich die Vorbereitungsarbeiten an den Holzbauteilen verringern und damit die Herstellungskosten senken. Durch die Verwendung von Holzschrauben anstelle von Nägeln läßt sich die Anzahl der Elemente verringern, denn die erfindungsgemäßen Bohrschrauben können mit dickeren Schäften ohne gesondertes Vorbohren verwendet werden, als dies bei Nägeln möglich wäre. Dabei erfolgt eine gute Verankerung in dem Blech. Das Gewinde der Holzschraubenabschnitte sorgt für eine ideale Verankerung des Verbindungselementes im Holz, so daß das Holz mit dazu beiträgt, die Bohrschraube zur Aufnahme des durch Schubbelastung erzeugten Biegemoments zu versteifen.

Da man bei dem neuen System ohne Vorbohren des jeweiligen Knotenblechs mit gesondertem Werkzeug auskommen will, muß man die Verbindungselemente so gestalten, daß mit ihnen durch dickeres Stahlblech gebohrt werden kann. Durch dickeres Stahlblech läßt sich aber nicht mit der gleichen Vorschubgeschwindigkeit bohren wie durch Holz. Während des Durchbohrens des Knotenblechs wünscht man ferner kein Klemmen des Schraubschaftes im Holz. Deshalb weist die Bohrspitze zwei Bohrabschnitte unterschiedlichen Durchmessers auf, um bis zum Erreichen des Knotenbleches ein ausreichend großes Loch in Holz zu bohren, in welchem der vordere Schraubabschnitt nicht klemmt. Das Loch des Knotenblechs wird mit dem ersten Bohrabschnitt bei sehr geringem Vorschub gebohrt, danach schneidet sich Gewinde mit größerem Vorschub in dieses Knotenblech, so daß sich der vordere Schraubabschnitt in dem Knotenblechloch verankern kann. Es versteht sich, daß durch entsprechende Wahl des Gewindeaußendurchmessers des hinteren Schraubabschnittes eine gute Verankerung in dem zuvor gebohrten Loch des Holzbauteils stattfindet.

Die Erfindung wird anhand der Zeichnung beschrieben. Dabei zeigt:
- Fig. 1: eine erste Ausführungsform einer Bohrschraube, von der Seite gesehen,
- Fig. 1A: eine Ansicht von oben auf die Bohrschraube,
- Fig. 2: eine abgewandelte Einzelheit, nämlich eine Bohrspitze, von der Seite gesehen,
- Fig. 3: das Eintreiben der Bohrschraube in Holz und Knotenblech in einer schematischen Schnittdarstellung,
- Fig. 4: eine zweite Ausführungsform der Bohrschraube, von der Seite gesehen,
- Fig. 4A: eine Ansicht von oben auf die Bohrschraube,
- Fig. 4B: eine vergrößerte Einzelheit aus Fig. 4 und
- Fig. 5: eine abgewandelte Bohrspitze, von der Seite gesehen.

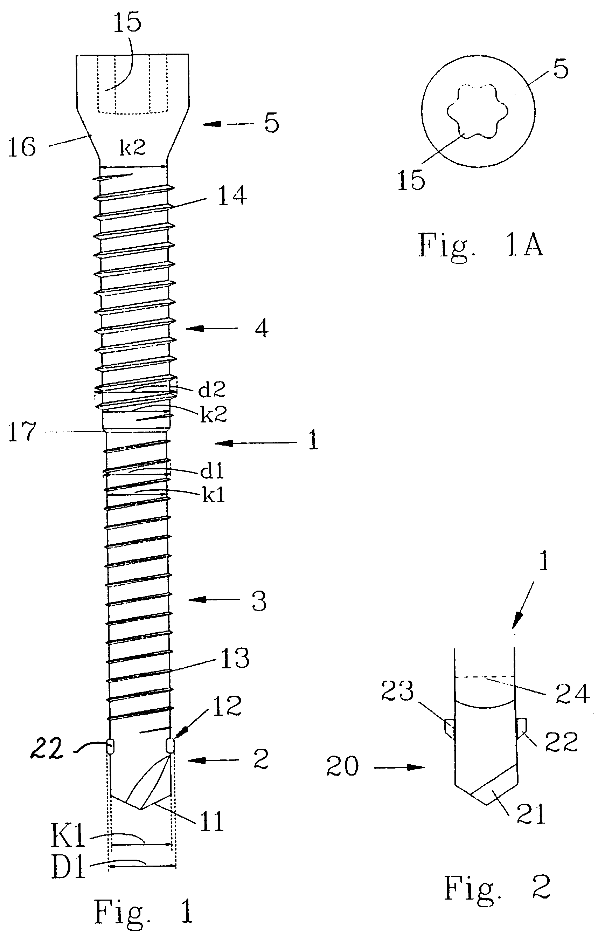

Fig. 1 und Fig. 1A zeigen eine Bohrschraube 1, die eine Bohrspitze 2, einen vorderen Gewindeschaftabschnitt 3, einen hinteren Gewindeschaftabschnitt 4 und einen Schraubkopf 5 aufweist. Die Bohrspitze 2 umfaßt einen ersten Bohrabschnitt 11, bestehend aus zwei im Winkel zueinander angeordneten Schneiden, und einen zweiten Bohrabschnitt 12, bestehend aus zwei wegbrechbaren Flügeln 22 aus herausgeformtem Schaftmaterial oder aus Blech. Die Bohrabschnitte 11 und 12 sind gestaffelt zueinander angeordnet, d.h. sie sind in Axialrichtung hintereinander und in Radialrichtung von innen nach außen angeordnet. Die Schneiden sind zum Bohren in Holz und Metall ausgebildet. Man kann deshalb von einer selbst-schneidenden Stahl-Holzschraube 1 sprechen. Zwischen den beiden Schaftabschnitten 3 und 4 befindet sich noch eine Stufe 17, die beispielsweise einen Flankenwinkel von 45 Grad aufweisen kann.

Der vordere Schaftabschnitt 3 weist Holzgewinde 13 von beispielsweise 0,5 mm Breite und 2,5 mm Ganghöhe auf. Der Außendurchmesser d1 beträgt beispielsweise 9 mm, während der Kerndurchmesser k1 8 mm beträgt. Der hintere Schaftabschnitt 4 weist ebenfalls ein Holzgewinde 14 auf, welches eine Breite von 0,8 mm und eine Ganghöhe von 2,5 mm besitzen kann. Der Außendurchmesser d2 des hinteren Schaftabschnittes 4 beträgt im angegebenen Ausführungsbeispiel 11 mm, während der Kerndurchmesser k2 hier mit dem Außendurchmesser d1 übereinstimmt und 9 mm beträgt. Bis auf 0,2 mm Übermaß stimmt der Durchmesser K1 des ersten Bohrabschnitts 11 mit dem Kerndurchmesser k1 des vorderen Schaftabschnitts 3 überein und auch der Außendurchmesser D1 des zweiten Bohrabschnittes 12 hat die gleiche Abmessung wie der Außendurchmesser d1 des vorderen Schaftabschnitts 3. Diese Werte von D1, d1 einerseits und K1 und k1 andererseits brauchen aber nicht übereinzustimmen. Der Durchmesser K1 des ersten Bohrabschnittes 11 kann um mehr als 0,2 mm größer als der Kerndurchmesser k1 sein, ebenso kann der Durchmesser D1 des zweiten Bohrabschnittes 12 etwas größer als der Außendurchmesser d1 oder der Kerndurchmesser k2 sein. Das Übermaß wird empirisch bestimmt und hängt von der Holzdichte ab, die bei dem Holztragwerk verwendet wird. Das zum Gegengewinde verformte Blech- oder Holzmaterial muß nämlich im Raum zwischen Bohrloch und Kern Platz finden.

Der Kopf 5 weist eine Imbusausbildung 15 auf, die relativ tief in den Kopf hineinreicht und Zahnflanken nachgebildet ist, wie am besten aus Fig. 1A ersichtlich. Eine derartige Ausbildung ist als "Torx-Antrieb" bekannt und ermöglicht, relativ hohe Drehmomente auf die Bohrschraube 1 aufzubringen. Der Kopf besitzt einen kegelförmigen Übergang 16 zum Schraubschaft aus den beiden Abschnitten 3 und 4.

Es können auch anders ausgebildete Köpfe 5 verwendet werden, sofern diese geeignet sind, die hohen Drehmomente aufzunehmen.

Fig. 2 zeigt eine abgewandelte Bohrspitze 2, bestehend aus einem Einsatzplättchen 20 mit Schneidkanten 21 zur Bildung des ersten Bohrabschnitts 11. Die Flügel 22 zur Bildung des zweiten Bohrabschnitts 12 sind über Sollbruchstellen 23 mit dem Schaftrohr dem Bohrplättchen 20 verbunden. Das Bohrplättchen 20 selbst ist in einem Querschlitz 24 am vorderen Ende der Bohrschraube 1 befestigt, beispielsweise durch Klemmung.

Die Ausführungsform nach Fig. 2 der Bohrspitze 2 hat den Vorteil, daß das Material der Schraube 1 und das des Bohrplättchens 20 unterschiedlich sein kann, um den jeweiligen Anforderungen besser angepaßt zu sein. Im allgemeinen wird man ein zäheres Material für den Schraubschaft als für die Bohrspitze verwenden, die hartes Material zum Schneiden in Stahl benötigt.

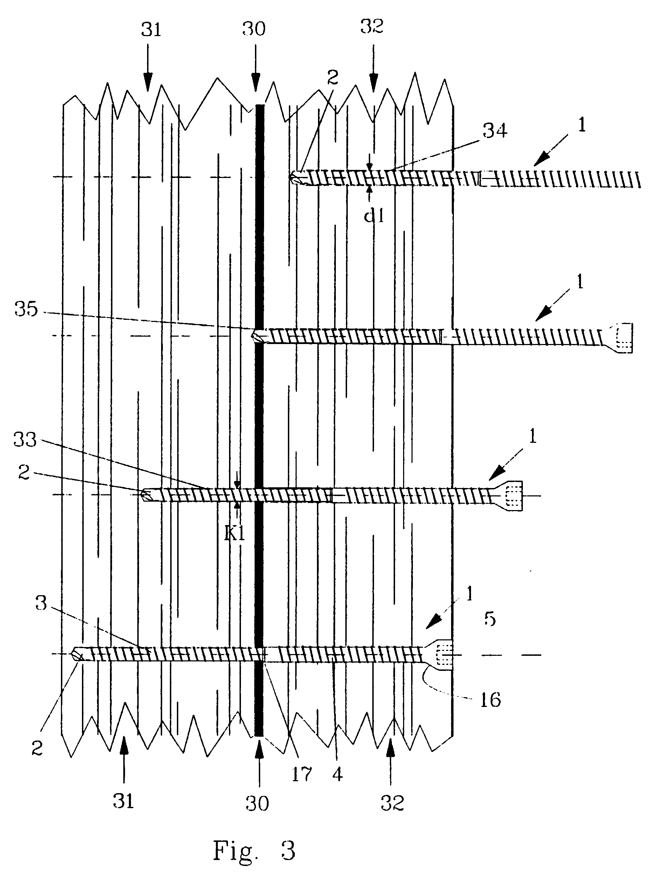

Fig. 3 zeigt einen Querschnitt durch einen Teil eines Holztragwerkknotens. Ein erstes Knotenblech 30 ist in einen Schlitz von länglichen Holzbauteilen eingefügt, so daß ein vorderer Holzbauteilabschnitt 31 und ein rückwärtiger Holzbauteilabschnitt 32 unterschieden werden können. Bei Verwendung von zwei Knotenblechen schließt sich ein weiterer Holzbauteilabschnitt links an den Abschnitt 31 unter Zwischenfügung des zweiten Bleches an. Die Dicke des rückwärtigen Abschnittes 32 entspricht der Länge des hinteren Schaftabschnittes 4 plus Schraubkopf 5, während die Länge des vorderen Schaftabschnittes 3 mit Bohrspitze 2 geringfügig kürzer ist als die Dicke des vorderen Holzbauteilabschnittes 31.

Wie in Fig. 3 oben dargestellt, wird die Bohrschraube 1 in den rückwärtigen Holzkörper 32 eingetrieben, wobei im Holz eine Bohrung 34 mit dem Durchmesser D1 gebildet wird. Die Bohrungsweite D1 kann, wie erwähnt, gleich dem Durchmesser d1 oder etwas größer sein. Wenn die Bohrungsspitze 2 das Knotenblech 30 erreicht, wird darin eine Bohrung 35 mit dem Durchmesser K1 gebohrt. Es versteht sich, daß dabei der Vorschub der Bohrschraube 1 sehr klein ist, wobei sich die Gewindegänge 13 frei in der Bohrung 34 drehen, ohne einzuschneiden. Wenn die Bohrungsspitze 2 durch das Blech 30 gedrungen ist, werden die Flügel 22 erreicht, und diese brechen entlang ihren Sollbruchstellen 23 ab, und die Schraube 1 kann bis zum Erreichen der Gewindegänge 13 weiter vorrücken. Die Gewindegänge 13 greifen nunmehr in die im Blech 30 gebildete Bohrungswand 35 ein und ergeben eine gewisse Vorwärtsführung für die Schraube 1. Es wird eine Bohrung 33 mit dem Durchmesser K1 in dem vorderen Holzbauteilabschnitt 31 gebohrt, wobei sich die Gewindegänge 13 in die Bohrungswand eingraben. Die Schraube 1 wird weiter in die Holzbauteile hineingetrieben, bis die Schulter 17 an dem Knotenblech 30 zur Anlage kommt. Holz hat im allgemeinen genügende Nachgiebigkeit, so daß auch der Schraubkopf 5 zum Verschwinden gebracht werden kann, wobei der kegelförmige Übergang 16 sehr behilflich ist.

Bei Verwendung von zwei Knotenblechen wird von links und von rechts gebohrt, wobei die vorderen Schaftabschnitte 3 sich im Abschnitt 31 wiederfinden.

Die erhaltene Struktur zeichnet sich dadurch aus, daß die beiden Schaftabschnitte 3 und 4 der Bohrschraube 1 infolge des einschneidenden Gewindes 13 und 14 in ihren jeweiligen Holzbauteilabschnitten 31, 32 verankert sind. Die in den Holzbauteilen montierten Bohrschrauben 1 werden infolge von Querlasten über das jeweilige Knotenblech auf Schub beansprucht, was zu einem Biegemoment auf die Bohrschraube führt. Durch die gute Verankerung der Bohrschraube im Holz nimmt das Holz einen Teil dieses Biegemomentes auf, d.h. die Schraube wird durch das Holz versteift. Da man den Schraubschaft relativ dick machen kann, besteht eine weitere bequeme Möglichkeit dazu, das Biegemoment aufzunehmen.

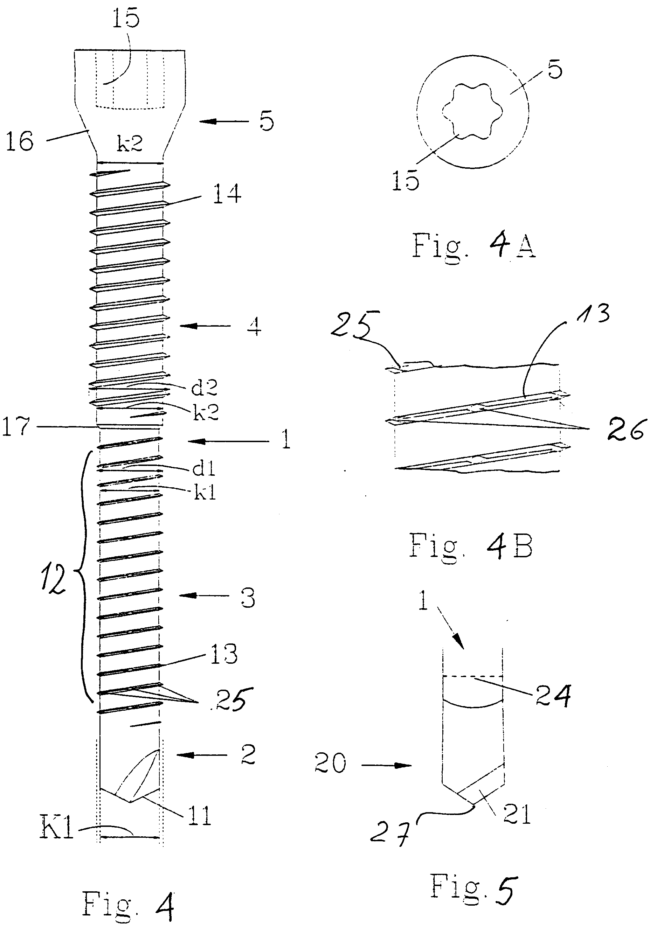

Fig. 4, 4A und 4B zeigen eine zweite Ausführungsform der Bohrschraube, die zur Zeit bevorzugt wird. Gleiche Bezugszeichen gegenüber der Ausführungsform von Fig. 1 bezeichnen gleiche Funktionsteile. Der hauptsächlichste Unterschied besteht in der Ausbildung des zweiten Bohrabschnittes 12. Dieser ist mit dem Gewindeschaftabschnitt 3 überlagert und besteht aus Schneidkanten 25, die durch Lücken 26 in dem Gewinde 13 gebildet werden. Die Lücken 26 sind aus Herstellungsgründen axial hintereinander angeordnet, wie dies ähnlich bei Gewindeschneidköpfen bekannt ist. Die Schneiden 25 dienen jedoch nicht zum Schneiden von Gewinde im Holz, sondern zum Wegfräsen einer zylinderförmigen Holzschicht, um die Bohrung 34 von dem zunächst gebohrten Durchmesser K1 auf den Durchmesser d1 aufzuweiten.

Die Bohrschraube 1 nach Fig. 4 wird in der gleichen Weise angewendet, wie im Zusammenhang mit Fig. 3 beschrieben. Wenn jedoch die Bohrspitze mit ihrem ersten Bohrungsabschnitt 11 auf das Blech 30 auftrifft, wird der zügige Vortrieb von beispielsweise 2,5 mm pro Umdrehung auf einen viel geringeren Vortrieb von ungefähr 1/100 mm pro Umdrehung für das Bohren in Stahl reduziert. Die Gewinderippen 13 der Bohrschraube können nicht mehr den Gewindegängen im Holz folgen, und die Schneiden 25 fräsen das Holz entlang eines Zylinders weg, dessen radiale Dicke der Höhe der Gewinderippen 13 entspricht. Man könnte auch vom Aufschaben der Bohrung mit dem Durchmesser K1 auf den Durchmesser d1 sprechen. Wenn die Gewindehöhe mit 0,5 mm gering ist, erfolgt dieses Aufbohren sehr schnell, bei etwa einer Umdrehung der Bohrschraube, und das für den Fräsvorgang benötigte Drehmoment ist kleiner als das Drehmoment zum Schneiden der Bohrung in Stahl. Bei größerer Gewindehöhe wird mehr als eine Umdrehung für das Aufbohren benötigt, was ebenfalls zuträglich ist. Man kann hierzu die Gewindehöhe zwischen Bohrspitze 2 und Stufe 17 ansteigen lassen, um das für den Fräsvorgang benötigte Drehmoment über eine größere Anzahl von Umdrehungen zu verteilen.

Gegenüber der Ausführungsform mit den wegbrechbaren Flügeln 22 werden also zunächst Gewindegänge in Holz entsprechend dem Gewinde 13 gebildet, und dieses wird dann zum Zeitpunkt des Auftreffens des ersten Bohrungsabschnitts 11 auf das Blech durch Fräsen oder Schaben zerstört. Auf diese Weise wird im rückwärtigen Holzabschnitt 32 eine Bohrung mit dem Durchmesser d1 geschaffen, welche den Bohrvorgang im Blech nicht behindert, d. h. der Schaft 3 klemmt nicht.

Wenn der Bohrungsabschnitt 11 die Bohrung 35 im Blech 30 geschaffen hat, wird erneut auf rascheren Vortrieb umgeschaltet, und das Gewinde 13 mit seinen Schneiden 25 schneidet sich in das Metall ein, um die Bohrschraube entsprechend dem Gewinde zu führen und vorzutreiben. Dies entspricht der Vorgehensweise, wie in Fig. 3 beschrieben.

Fig. 5 zeigt eine Ausführungsform mit Hartmetallplättchen 20 als erstem Bohrungsabschnitt. Die äußerste Bohrungsspitze 27 weist eine gewisse Abrundung auf, um das Eindringen der Spitze in Stahl und damit die Belastung des Plättchens zu begrenzen. Dadurch wird vermieden, daß das Bohrplättchen 30 aus der Verankerung herausreißt.

## Patentansprüche

1. Holztragwerk mit folgenden Merkmalen:
eine Anzahl von Holzbauteilen, die für wenigstens einen Knotenbereich zusammenpassend bearbeitet sind;
wenigstens ein Knotenblech;
Verbindungselemente, die sich durch die Holzbauteile quer zu dem wenigstens einen Knotenblech erstrecken;
gekennzeichnet durch folgende Ausbildung:
die Verbindungselemente sind als Bohrschrauben (1) ausgebildet, die jeweils eine Bohrspitze (2), einen vorderen Schaftabschnitt (3), einen hinteren Schaftabschnitt (4) und einen Schraubkopf (5) aufweisen;
der vordere Schaftabschnitt (3) weist ein erstes Holzgewinde (13) mit einem ersten Kerndurchmesser (k1) und einem ersten Außendurchmesser (d1) und der hintere Schaftabschnitt (4) weist ein zweites Holzgewinde (14) mit einem zweiten Kerndurchmesser (k2) und einem zweiten Außendurchmesser (d2) auf;
der erste Außendurchmesser (d1) entspricht etwa dem zweiten Kerndurchmesser (k2);
die Bohrspitze (2) ist sowohl zum Vorbohren in Holz eines rückwärtigen Bohrungsabschnittes (34) mit dem ersten Außendurchmesser (d1) oder einem etwas größeren Durchmesser (D1) als auch zum Durchbohren des Knotenblechs (30) und Weiterbohren in Holz für einen vorderen Bohrungsabschnitt (33) mit dem ersten Kerndurchmesser (k1) oder einem etwas größeren Durchmesser (K1) ausgebildet;
der vordere Schaftabschnitt (3) ist mit seinem Gewinde (13) in dem vorderen Bohrungsabschnitt (33) und in der Bohrung (35) des Knotenblechs (30) und der rückwärtige Schaftabschnitt (4) in dem rückwärtigen Bohrungsabschnitt (34) verankert.

2. Holztragwerk nach Anspruch 1,
dadurch gekennzeichnet, daß die Länge des vorderen Schaftabschnittes (3) die kombinierte Dicke des vorderen Holzbauteilabschnittes (31) und des Knotenbleches (30) etwas unterschreitet, während die kombinierte Länge des hinteren Schraubabschnittes (4) und des Schraubkopfes (5) der Dicke des hinteren Holzbauteilabschnittes (32) entspricht.

3. Verfahren zur Herstellung eines Holztragwerks mit mindestens einer Verbindung zwischen einem vorderen (31) und einem rückwärtigen (32) Holzbauteil und Metallblech (30), insbesondere bei einem Fachwerkknoten, mit folgenden Schritten:
a) die Holzbauteile (31, 32) werden zu dem mindestens einen Metallblech (30) ausgerichtet und festgelegt;
b) das jeweils rückwärtige Holzbauteil (32) wird mit wenigstens einer Bohrschraube (1) durchbohrt, die eine Bohrspitze (2), einen vorderen Schaftabschnitt (3), einen hinteren Schaftabschnitt (4) und einen Schraubkopf (5) aufweist, und es wird dabei ein erstes Holzbohrloch (34) mit einem ersten Durchmesser (D1 oder d1) erzeugt;
c) das Metallblech (30) wird mit der Bohrschraube (1) durchbohrt und dabei ein Blechbohrloch (35) mit einem zweiten Durchmesser (K1) erzeugt;
d) das jeweils vordere Holzbauteil (31) wird mit der Bohrschraube (1) durchbohrt und dabei ein zweites Holzbohrloch (33) mit dem zweiten Durchmesser (K1) erzeugt;
e) gleichzeitig mit Schritt d) werden fortschreitend mit dem Vordringen der Bohrschraube (1) Gewindeabschnitte in die Holzbauteile (31, 32) und das Metallblech (30) geschnitten, und zwar in das Blech (30) und das vordere Holzbauteil (31) mit dem Außendurchmesser (d1) des vorderen Schaftabschnitts (3) und in das zweite Holzbauteil (32) mit dem Außendurchmesser (d2) des hinteren Schaftabschnitts (4).

4. Verfahren nach Anspruch 3,
dadurch gekennzeichnet, daß das erste Holzbohrloch (34) in zwei Teilschritten erzeugt wird:
b1) Bohren mit dem Kerndurchmesser (K1) der Bohrspitze (2) als erstem Bohrabschnitt (11) und
b2) Aufbohren mit dem Außendurchmesser (D1 oder d1) des zweiten Bohrabschnitts (12) der Bohrschraube.

5. Bohrschraube mit folgenden Merkmalen:
eine Bohrspitze (2),
ein vorderer Schaftabschnitt (3),
ein hinterer Schaftabschnitt (4) und
ein Schraubkopf (5);
die Bohrspitze (2) bildet einen ersten Bohrabschnitt (11) zum Durchbohren auch eines stärkeren Metallblechs (30);
an die Bohrspitze schließen sich Aufbohrmittel als zweitem Bohrabschnitt (12) zum Aufbohren einer Bohrung (34) in Holz an;
der vordere Schaftabschnitt (3) weist ein erstes Holzgewinde (13) mit einem ersten Kerndurchmesser (k1) und einem ersten Außendurchmesser (d1) und der hintere Schaftabschnitt (4) weist ein zweites Holzgewinde (14) mit einem zweiten Kerndurchmesser (k2) und einem zweiten Außendurchmesser (d2) auf;
der erste Außendurchmesser (d1) entspricht etwa dem zweiten Kerndurchmesser (k2);
der erste Bohrabschnitt (11) besitzt einen Außendurchmesser (K1), der dem ersten Kerndurchmesser (k1) entspricht oder etwas größer ist;
die Aufbohrmittel (12) weisen einen Außendurchmesser auf, der dem ersten Außendurchmesser (d1) des vorderen Schaftabschnitts (3) entspricht oder etwas größer ist.

6. Bohrschraube nach Anspruch 5,
dadurch gekennzeichnet, daß die Aufbohrmittel (12) in Schneidkanten (25) bestehen, die an dem ersten Holzgewinde (13) durch Lücken (26) in den Gewinderippen gebildet worden sind.

7. Bohrschraube nach Anspruch 5,
dadurch gekennzeichnet, daß der zweite Bohrabschnitt (12) wegbrechbare Teile (22) besitzt, die zum Wegbrechen beim Auftreffen auf das Metallblech (30) ausgebildet sind.

8. Bohrschraube nach Anspruch 7,
dadurch gekennzeichnet, daß der Durchmesser (K1) des ersten Bohrabschnittes (11) der Bohrspitze (2) etwas größer als der Kerndurchmesser (k1) des ersten Schaftabschnitts (3) und der Durchmesser (D1) des zweiten Bohrabschnittes (12) der Bohrspitze etwas größer als der Außendurchmesser (d1) des ersten Schaftabschnittes (3) ist.

9. Bohrschraube nach einem der Ansprüche 5 bis 8,
dadurch gekennzeichnet, daß die Bohrspitze aus einem Bohrplättchen (20) besteht, das in einem Querschlitz (24) am vorderen Ende der Bohrschraube befestigt ist.

10. Bohrschraube nach Anspruch 9,
dadurch gekennzeichnet, daß das Bohrplättchen (20) eine gerundete Spitze (27) aufweist.

11. Bohrschraube nach einem der Ansprüche 5 bis 10,
dadurch gekennzeichnet, daß der Schraubkopf (5) einen kegelförmigen Übergang (16) zu dem Schraubschaft aufweist und eine Imbusausbildung (15) besitzt, die Zahnflanken nachbildet.

12. Bohrschraube nach einem der Ansprüche 5 bis 11,
dadurch gekennzeichnet, daß die Gewindehöhe des ersten vorderen Holzgewindes (13) kleiner als die Gewindehöhe des zweiten hinteren Holzgewindes (14) ist.
